# EUROPÄISCHE PATENTSCHRIFT

(11) **EP 1 040 035 B1**
(45) Veröffentlichungstag und Bekanntmachung des Hinweises auf die Patenterteilung: **14.03.2007**
(21) Anmeldenummer: 98965177.3
(22) Anmeldetag: 25.11.1998
(51) Int. Cl.: B60T 8/00

(54) **VERFAHREN UND VORRICHTUNG ZUR BEGRENZUNG DER QUERBESCHLEUNIGUNG EINES FAHRENDEN FAHRZEUGS**
METHOD AND DEVICE FOR LIMITING TRANSVERSAL ACCELERATION IN A MOTOR VEHICLE
PROCEDE ET DISPOSITIF POUR LIMITER L'ACCELERATION TRANSVERSALE D'UN VEHICULE EN MARCHE

(43) Veröffentlichungstag der Anmeldung: 04.10.2000
(73) Patentinhaber: Continental Teves AG & Co. oHG, 60488 Frankfurt (DE)
(72) Erfinder: WOYWOD, Jürgen, D-64542 Mörfelden (DE); GRONAU, Ralph, D-35083 Wetter (DE); BURKHARD, Dieter, D-67714 Waldfischbach-Burgalben (DE); IHRIG, Hans-Georg, D-64293 Darmstadt (DE); KIENLE, Lothar, D-68623 Lampertheim (DE)
(86) Internationale Anmeldenummer: PCT/EP1998/007601
(87) Internationale Veröffentlichungsnummer: WO 1999/030941

(56) Entgegenhaltungen:
- DE-A- 4 430 458
- DE-A- 19 632 943
- DE-C- 19 602 879
- US-A- 4 898 431

## Beschreibung

Die Erfindung betrifft ein Verfahren und eine Vorrichtung zur Begrenzung der Querbeschleunigung eines fahrenden Fahrzeugs gemäß den Oberbegriffen der unabhängigen Ansprüche.

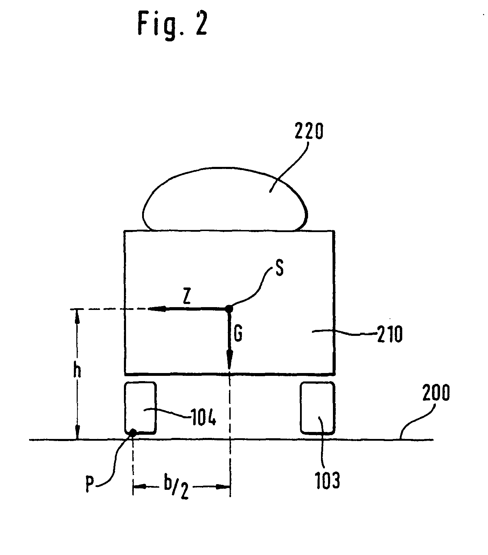

In zunehmendem Maße werden Fahrzeuge gefahren, etwa Geländewägen oder Kleinbusse, die einerseits eine sehr gute Bodenhaftung und andererseits einen vergleichsweise hohen Schwerpunkt haben. Dadurch können Probleme dahingehend entstehen, daß die aufgrund der guten Bodenhaftung übertragenen Querkräfte so groß sind, daß die entstehende Zentrifugalkraft zu einem Kippen des Fahrzeugs führt. Die physikalischen Zusammenhänge werden kurz anhand von Fig. 2 erläutert:

Fig. 2 zeigt schematisch von hinten ein Fahrzeug 210 auf einer Fahrbahn 200. 103 und 104 sind die Räder an der Hinterachse. Es wird angenommen, daß das Fahrzeug eine Rechtskurve fährt, sich in Projektion auf die Zeichenebene also nach rechts bewegen würde. Durch die Kreisfahrt des Fahrzeugs entsteht eine Zentrifugalkraft Z = m * ω² * r = mv²/r, wobei m die Fahrzeugmasse ist, ω die Winkelgeschwindigkeit während der Kreisfahrt, v die Fahrzeuggeschwindigkeit und r der Radius der Kreisfahrt. Die wirkende Zentrifugalkraft Z, die als Produkt aq * m ausgedrückt werden kann, wobei aq die Querbeschleunigung ist, kann man sich am Schwerpunkt S des Fahrzeugs angreifend denken. Der Schwerpunkt S liegt in etwa mittig zwischen den Rädern und in einer Höhe h über der Fahrbahn. Am Schwerpunkt S greift ebenfalls die Gewichtskraft G = m * g an, wobei g die Endbeschleunigung ist. Solange das Fahrzeug auf dem gewünschten Kreis fährt (es gilt dann aq = v²/r), solange also die Seitenführungskräfte F an den vier Rädern (etwa entsprechend F = µ * G, wobei µ der Reibwert zwischen Reifen und Fahrbahn ist) gleich der Zentrifugalkraft Z sind, werden die genannten Zentrifugalkräfte gemäß obiger Gleichung entstehen. Es kann dann passieren, daß das Fahrzeug aufgrund einer ungünstigen Momentenverteilung über das Außenrad kippt. Prinzipiell passiert dies, wenn G ** b/2 < Z * h gilt, wobei h die Höhe des Schwerpunkts S über der Fahrbahn 200 ist und b/2 in etwa die halbe Spurbreite des Fahrzeugs ist. Die obige Ungleichung stellt in erster Näherung das Momentengleichgewicht um den Punkt P dar. Wenn das auswärtsdrehende Moment Z □ h größer ist als das einwärtsdrehende Moment G * b/2, kippt das Fahrzeug nach außen. Diese Gefahr ergibt sich insbesondere bei Fahrzeugen mit geringer Spurbreite (b/2 klein) und vergleichsweise großer Höhe und damit hohem Schwerpunkt (hoher Wert von h), beispielsweise veranlaßt auch durch eine Dachlast 220 auf dem Fahrzeug 210.

Um einen derartigen Betriebszustand vermeiden zu können, müssen
- eine kritische Situation, insbesondere ein Fahrzustand mit kritischer Querbeschleunigung, detektiert werden, und
- auf die Detektion hin geeignete Gegenmaßnahmen getroffen werden.

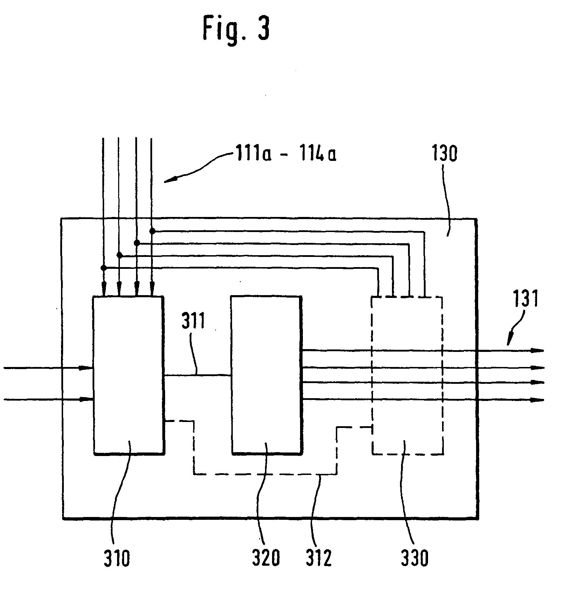

In der DE 196 02 879 C1 ist ein gattungsgemäßes Verfahren zur Umkippvermeidung offenbart. Dieses beschäftigt sich mit der Steuerung einer Kippbewegung des Fahrzeugs um die Längsachse. Dazu soll die Querbeschleunigung mit einem Grenzwert verglichen werden, beim Überschreiten des Grenzwerts wird ein Bremseingriff eingeleitet, danach wird das Ansprechen des ABS überwacht und wenn das ABS anspricht, wird eine Bremsung vorgenommen. Der Bremseneingriff findet am kurveninneren Hinterrad eines Anhängers statt (Fig. 3).

Aufgabe der Erfindung ist es, ein einfaches und zuverlässiges Verfahren und eine entsprechende Vorrichtung zur Begrenzung der Querbeschleunigung eines fahrenden Fahrzeugs anzugeben.

Diese Aufgabe wird mit den Merkmalen der unabhängigen Ansprüche gelöst. Abhängige Ansprüche sind auf bevorzugte Ausführungsformen der Erfindung gerichtet.

Nachfolgend werden einzelne Ausführungsformen der Erfindung bezugnehmend auf die Zeichnungen beschrieben, es zeigen:
- Fig. 1: schematisch ein Fahrzeug in Draufsicht,
- Fig. 2: schematisch ein Fahrzeug von hinten,
- Fig. 3: schematisch eine Ausführungsform einer erfindungsgemäßen Vorrichtung,
- Fig. 4: schematisch eine Ausführungsform einer erfindungsgemäßen Erkennungseinrichtung, und
- Fig. 5: schematisch eine Ausführungsform eines erfindungsgemäßen Verfahrens als Flußdiagramm.

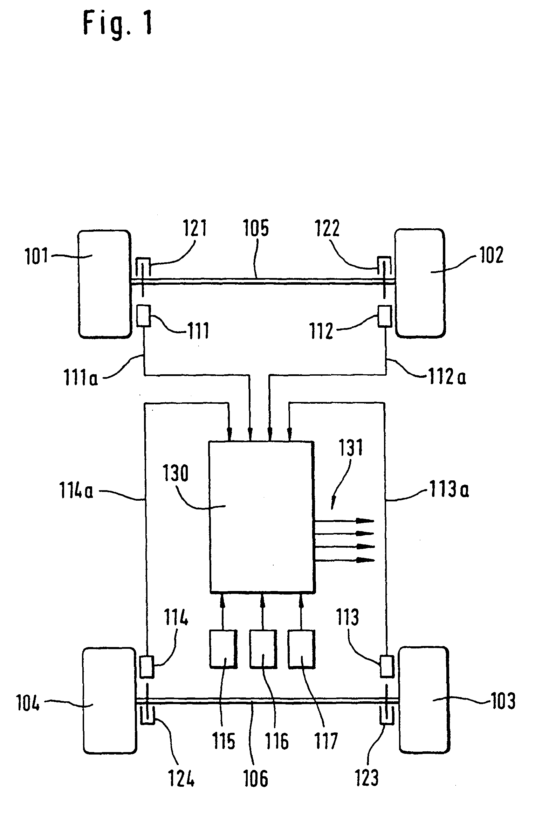

Fig. 1 zeigt schematisch ein Fahrzeug in Draufsicht, in dem die Erfindung angewendet werden kann. 101 bis 104 sind die Räder des Fahrzeugs (vorne links, vorne rechts, hinten rechts und hinten links), 111 bis 114 jeweils zugeordnete Radsensoren, 121 bis 124 jeweils Radbremsen. 111a bis 114a sind Signalleitungen, die die Signale der Radsensoren 111 bis 114 einer Steuerung bzw. Regelung 130 im weitesten Sinne eingeben. Die Steuerung bzw. Regelung 130 kann Eingangssignale weiterer Sensoren 115 bis 117 empfangen. Sie erzeugt Ausgangssignale 131, mit denen beispielsweise die Bremsen 121 bis 124 angesprochen werden können. Daneben kann auch das Antriebsmoment durch Beeinflussung des Motors einstellbar sein.

Fig. 3 zeigt schematisch eine erfindungsgemäße Vorrichtung zur Begrenzung der Querbeschleunigung eines fahrenden Fahrzeugs. 310 ist eine Erkennungseinrichtung zum Erkennen eines Fahrzustands mit kritischer Querbeschleunigung, 320 ist eine Beeinflussungseinrichtung zum Beeinflussen des Bremsdrucks an zumindest einem Rad bzw. zum Beeinflussen des Antriebsmoments, wenn die kritische Querbeschleunigung erkannt wurde. Letztere ist in der Regel eine fahrzeugtypische Größe, die empirisch ermittelt und/oder berechnet werden kann. Soweit möglich, können externe, ermittelbare Faktoren, die die kritische Querbeschleunigung beeinflussen, berücksichtigt werden.

Die Erkennungseinrichtung 310 kann verschiedene Erkennungsstrategien aufweisen. Vorzugsweise wird ein System betrachtet, das den Fahrzustand mit kritischer Querbeschleunigung mittelbar oder unmittelbar aus den Radsignalen der Radsensoren 111 bis 114 erkennt. Zur Klarstellung sei angemerkt, daß unter "Radsignalen" Signale 111a bis 114a verstanden werden, die die Drehgeschwindigkeit bzw. Bahngeschwindigkeit eines abrollenden Rades widerspiegeln. Wenn nicht besonders erwähnt, können dabei bezüglich des Raddurchmessers korrigierte Radgeschwindigkeiten oder unkorrigierte Radgeschwindigkeiten angesprochen sein. Wenn die Erkennungseinrichtung 310 einen Fahrzustand mit kritischer Querbeschleunigung erkannt hat, gibt sie zumindest ein Signal 311 aus, das der Beeinflussungseinrichtung 320 eben diesen kritischen Zustand mitteilt.

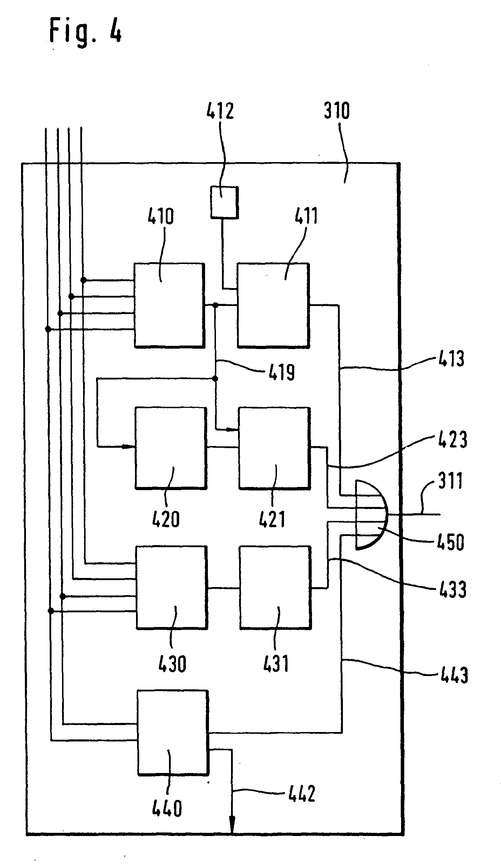

Nachfolgend wird bezugnehmend auf Fig. 4 eine Ausführungsform der Erkennungseinrichtung 310 beschrieben. Die Erkennungseinrichtung 310 weist in der gezeigten Ausführungsform vier Ermittlungseinrichtungen 410, 420, 430 und 440 auf, die jeweils bestimmte Kriterien ermitteln, die einen Hinweis auf eine kritische Querbeschleunigung geben können. 410 ist eine erste Ermittlungseinrichtung zum direkten Ermitteln der Querbeschleunigung. Gezeigt ist eine Ausführungsform, in der die erste Ermittlungseinrichtung 410 die vier Radsignale empfängt. Es kann sich bei ihr um ein komplexeres System handeln, das aus den Radsignalen Korrekturfaktoren für den Einfluß der Radradien ermittelt, und zwar sowohl kurzfristige als auch langfristige. Langfristige Korrekturfaktoren würden tatsächlich die unterschiedlichen Radradien kompensieren und somit Radgeschwindigkeiten vergleichbar machen. Kurzfristige Korrekturfaktoren können beispielsweise in der Kurve auftreten. Dort fährt das kurvenäußere Rad einen größeren Bogen als das kurveninnere und dreht deshalb schneller. Um die Vergleichbarkeit zur Fahrzeugreferenzgeschwindigkeit herbeizuführen, wäre dieser geometrische Unterschied durch kurzfristige Korrekturfaktoren aufzufangen. Da sich gerade in diesen kurzfristigen Korrekturfaktoren die Kurvenfahrt abbildet, kann insbesondere aus ihnen sowie aus den langfristigen Korrekturfaktoren und bezugnehmend auf weitere (nicht gezeigte) Eingangsgrößen die Querbeschleunigung ermittelt werden, die als Signal 419 ausgegeben werden kann. Die erste Ermittlungseinrichtung 410 kann beispielsweise den Algorithmus implementieren, der in der DE-OS 44 30 458 beschrieben ist. Der Inhalt dieser Patentanmeldung soll als zu dieser Anmeldung zugehörig angesehen werden. Wenn die erste Ermittlungseinrichtung 410 die kurzfristigen und langfristigen Korrekturfaktoren nicht selbst ermittelt, kann sie sie dort abfragen, wo sie erzeugt wurden. Auch dann ist der Bezug zu den Radgeschwindigkeiten gegeben.

411 ist eine Vergleichseinrichtung, die den ermittelten Wert der Querbeschleunigung mit einem Referenzwert 412 vergleicht. Ist das Signal auf Leitung 419 größer als das aus 412 kommende Signal, wird ein entsprechendes Signal 413 ausgegeben. Der in 412 gespeicherte Wert ist demnach als Schwellenwert für die Querbeschleunigung anzusehen. Er ergibt sich primär aus geometrischen Überlegungen (Fz * h = m * aqs * h = G * b/2 = m * g * b/2, gegebenenfalls in Verbindung mit Sicherheitsschwellen gegen Fehlerkennungen, Fahrbahnneigungen, Beladungsvarianten usw. (aqs = g * b/(2 * h), wobei aqs der ideale, sich aus dem genannten Momentengleichgewicht ergebende Grenzwert für die Querbeschleunigung ist). Sofern erfaßbar, kann der Schwellenwert 412 abhängig von Parametern gemacht werden, beispielsweise Verteilung der Zuladung, Höhe des Schwerpunkts usw.

Das Signal 413 weist auf das Vorliegen eines kritischen Zustands hin und kann geeignete, später zu beschreibende Maßnahmen auslösen.

420 ist eine zweite Ermittlungseinrichtung. Sie ermittelt die Dynamik der Querbeschleunigung. Insbesondere kann sie beispielsweise die Ableitung des auf Signalweg 419 vorliegenden Signals bilden und das so gewonnene Signal einer ersten Auswerteeinrichtung 421 zukommen lassen. Eine positive Dynamik zeigt an, daß die Querbeschleunigung steigt. Die Auswerteeinrichtung 421 kann dies zusammen mit gegebenenfalls weiteren Werten, beispielsweise dem schon absolut vorhandenen Wert der Querbeschleunigung (auf Signalweg 419), der Fahrgeschwindigkeit usw. entsprechend geeigneten Kriterien verknüpfen und daraus ein weiteres Alarmsignal 423 erzeugen.

Eine dritte Ermittlungseinrichtung 430 ermittelt Radschlupfwerte. Sie empfängt hierzu (nicht gezeigt) eine Fahrzeugreferenzgeschwindigkeit und bildet den Unterschied zu den einzelnen Radgeschwindigkeiten. 431 bezeichnet zweite Vergleichseinrichtungen, die die ermittelten Schlupfwerte mit Schwellenwerten vergleichen. Auf eine kritische Querbeschleunigung kann erkannt werden, wenn die Radschlupfwerte von kurveninneren Rädern über ersten Schwellenwerten und die Radschlupfwerte von kurvenäußeren Rädern unter zweiten Schwellenwerten liegen, wobei die zweiten Schwellenwerte vorzugsweise niedriger als die ersten Schwellenwerte sind. Für die Räder einer Seite des Fahrzeugs (vorne bzw. hinten) können unterschiedliche Schwellenwerte herangezogen werden. Wenn die genannten Bedingungen erfüllt sind, geben die zweiten Vergleichseinrichtungen ein Alarmsignal 433 aus.

Eine vierte Ermittlungseinrichtung 440 kann vorgesehen sein, um das Abheben eines Rads von der Fahrbahn zu erkennen. Sie kann wie folgt arbeiten: Sie macht sich die Tatsache zunutze, daß ein von der Fahrbahn abgehobenes Rad schon durch geringe Bremsdrücke deutlich abgebremst werden kann und dann somit deutliche Schlupfeinläufe zeigt. Es kann ausreichend sein, lediglich diejenige Achse zu überprüfen, die zuletzt abhebt (weil es Fahrzeuge gibt, die bei ansonsten stabilen Verhältnissen mit einem kurveninneren Rad abheben). Üblicherweise wird auf die Vorderachse geschaut, weil dort das Innenrad aufgrund des über der Motorachse liegenden Motors als letztes abhebt. Demzufolge würde die Erkennungseinrichtung 440 die Radsignale 111a und 112a empfangen. Zu bestimmten oder bestimmbaren Zeitpunkten veranlaßt die Einrichtung 440 eine vorzugsweise geringe Bremsdruckerhöhung der Räder der betrachteten Achse. Hierzu kann ein Signal 442 ausgegeben werden, das die nötigen Veranlassungen auslöst. Die Erhöhung des Bremsdrucks ist so gewählt, daß sie bei auf der Fahrbahn abrollendem Rad keinen merklichen Einfluß hinterläßt, aber ein abgehobenes Rad deutlich abbremst. Bremsdrücke von kleiner 10, vorzugsweise kleiner 5 bar können beispielsweise gewählt werden. Auf die Ausgabe des Signals 442 hin werden die Radsignale der Räder der betrachteten Achse auf ihr Laufverhalten und insbesondere auf ihren Schlupf hin überprüft. Wenn an einem Rad deutliche Schlupfeinläufe festgestellt werden, kann ein weiteres Alarmsignal 443 ausgegeben werden.

Anstelle eines Bremsdruckaufbaus kann, wenn das zuletzt abhebende Rad ein angetriebenes Rad ist, eine Motormomentenbetrachtung durchgeführt werden. Wenn durch eine vorhandene Motorschnittstelle, oder durch eine andere geeignete Einrichtung, sichergestellt werden kann, das Motormoment (Antriebs- oder Schleppmoment) auf das Rad einwirkt, kann der Prüfdruckaufbau entfallen und das Abheben dieses Rades an dem dem Motormoment entsprechenden Schlupfverhalten detektiert werden.

In der beschriebenen Ausführungsform werden somit a priori unabhängig voneinander Alarmsignale 413, 423, 433 und 443 erzeugt, die beispielsweise durch ein ODER-Gatter 450 zu einem einzigen Alarmsignal zusammengefaßt werden können, das als Signal 311 von der Erkennungseinrichtung 310 an die Beeinflussungseinrichtung 320 ausgegeben wird.

Es sei angemerkt, daß eine erfindungsgemäße Erkennungseinrichtung 310 eine oder mehrere der oben bezugnehmend auf Fig. 4 beschriebenen Komponenten 410 bis 440 aufweisen kann.

Auf die Erkennung einer kritischen Querbeschleunigung hin können unterschiedliche Maßnahmen getroffen werden: Wünschenswert ist a priori eine Geschwindigkeitsverringerung, da gemäß den eingangs genannten Formeln die Geschwindigkeit quadratisch in den Wert der Zentrifugalkraft und damit den Wert der Querbeschleunigung (Z = m * aq, wobei aq die Querbeschleunigung ist) eingeht. Eine Verringerung der Geschwindigkeit führt damit zu einer Abnahme der Querbeschleunigung. Geschwindigkeitsverringerung kann erfolgen durch Erhöhen der Bremskraft und/oder Erniedrigung der Antriebskraft.

Denkbar ist weiterhin eine Erhöhung des Kurvenradius, wobei dies a priori insofern ein gefährlicher Eingriff ist, als dadurch vom gewünschten Kurs des Fahrers abgewichen wird.

Sofern eine Motorschnittstelle vorhanden ist (Antriebsmoment seitens der Regelung beeinflußbar), kann auf die Erkennung einer kritischen Querbeschleunigung hin eine Absenkung der Antriebsleistung veranlaßt werden. Dadurch sinkt die Fahrzeuggeschwindigkeit und damit auch die Querbeschleunigung.

Denktar ist auch eine Erhöhung der Bremskraft möglich. Grundsätzlich kann gebremst werden, wenn nicht schon seitens des Fahrers gebremst wird, da dann die Bremsung an sich stabil ist. Das gleiche gilt im Teilbremsbereich (der Fahrer bremst, aber innerhalb eines Bereichs, in dem die Räder stabil laufen). Auch hier kann der Bremsdruck erhöht werden. Im Vollbremsbereich kann es dagegen wünschenswert sein, andere Beeinflussungsstrategien zu befolgen.

Bei der Ausführungsform der Erfindung wird vorgesehen, daß eine Reduzierung des Motormoments und ein aktiver Druckaufbau an den Bremsen der Vorderachse, bevorzugterweise am kurvenäußeren Rad, durchgeführt wird, was zur Begrenzung der Seitenführungskräfte an der Vorderachse führt. Dadurch rutscht das Fahrzeug geradeaus und durch die damit einhergehende Vergrößerung des Radius der Kreisfahrt wird die Querbeschleunigung reduziert und die Kippgefahr verringert sich.

In einer bevorzugten Ausführungsform ist die erfindungsgemäße Beeinflussungsvorrichtung anderen Reglern bzw. Steuerungen vorgeschaltet. In Fig. 3 ist dies schematisch durch das gestrichelte Kästchen 330 angedeutet, das diese anderen Steuerungen bzw. Regelungen symbolisieren soll. Bei einer Vollbremsung kann es sinnvoll sein, diese anderen Komponenten 330 qualitativ über das Vorliegen einer kritischen Querbeschleunigung zu informieren und bei diesen anderen Komponenten eine Veränderung der Regelstrategie zu veranlassen. Dadurch können die weitreichenden Funktionen dieser Komponenten genutzt werden. Beispielsweise können die anderen Komponenten dazu veranlaßt werden, innerhalb ihrer Regelungsstrategien eine "Druckschere" dahingehend aufzubauen, daß der Übersteuertendenz aufgrund einer Abbremsung (rotatorische Trägheit des abgebremsten Fahrzeugs um die Hochachse) ein entgegenwirkendes Moment zugeführt wird, beispielsweise durch höheren Druckaufbau kurvenaußen. Diese Überlegungen gelten im übrigen auch dann, wenn eine Teilbremsung oder gar keine Bremsung vorliegt. Insofern kann es wünschenswert sein, qualitativ weiteren Komponenten 330 der Bremsenregelung das Vorliegen der kritischen Situation über ein Signal 312 mitzuteilen, so daß diese Komponenten ihre Strategien geeignet modifizieren können. Die Beeinflussungsvorrichtung kann dann dahingehend verstanden werden, daß nicht unmittelbare Eingriffe an den Bremsdrücken bzw. Motormomenten vorgenommen werden, sondern daß beispielsweise Sollwerte oder Schwellenwerte anderer Komponenten zur Regelung der Bremse oder des Motors beeinflußt werden.

Sofern unmittelbare Bremsdruckbeeinflussungen durch die Beeinflussungsvorrichtung vorgesehen sind, kann es unter dem Aspekt der Sicherheit und des Vermeidens von anderweitig störenden Eingriffen a priori wünschenswert sein, achsweise symmetrische Eingriffe vorzunehmen, d.h. Bremsdrücke beispielsweise ohne Druckunterschied gleichmäßig links und rechts aufzubauen.

Um einen Druckaufbau zur Reduzierung der Querbeschleunigung auch dann veranlassen zu können, wenn der Fahrer nicht bremst, sollte die Bremsanlage mit einem aktiven Bremskraftverstärker oder mit einer Hydraulikpumpe gegebenenfalls mit Trennventilen ausgestattet sein.

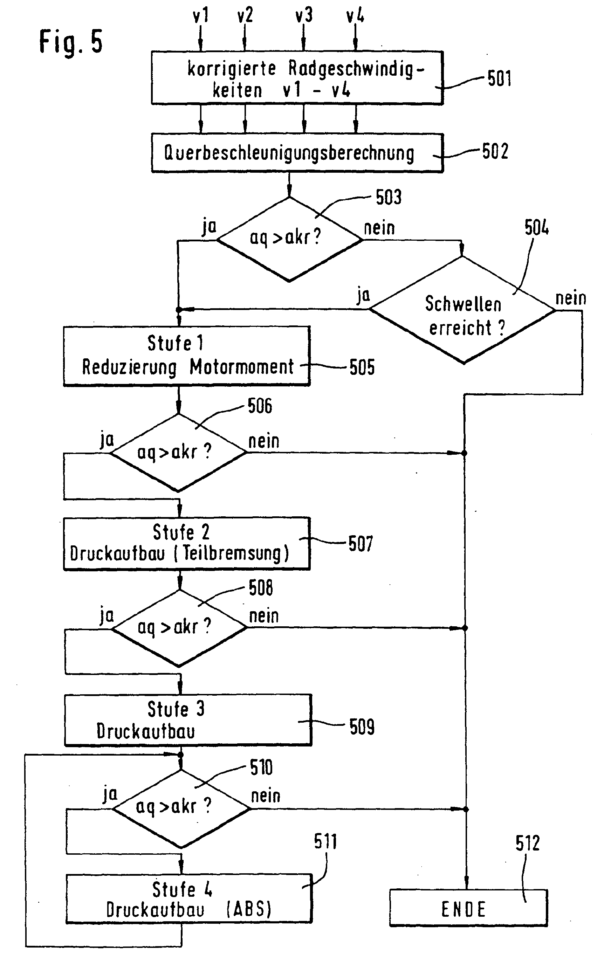

Fig. 5 zeigt schematisch eine Ausführungsform eines erfindungsgemäßen Verfahrens als Flußdiagramm. In Schritt 501 werden die Radgeschwindigkeiten v1 bis v4 (entsprechend Signalen 111a bis 114a) empfangen und korrigiert. Bei der Korrektur werden unterschiedliche Radradien berücksichtigt, so daß Vergleiche der für die einzelnen Räder gewonnenen Werte mit Referenzen bzw. untereinander zu richtigen Ergebnissen führen. Aus den korrigierten Werten wird die Querbeschleunigung 502 berechnet. In Schritt 503 wird sie auf einen kritischen Wert hin abgefragt. Dies entspricht dem Vorgang in den Komponenten 410 bis 412 in Fig. 4. Ist der ermittelte Wert überkritisch, wird die linke Seite des Flußdiagramms angesteuert (Schritte 505 und folgende). Ist der Wert unterkritisch, kann eine weitere Abfrage bezüglich der Radschlupfwerte erfolgen. Dies entspricht im wesentlichen den Vorgängen in den Komponenten 430 und 431 in Fig. 4. Dadurch können kritische Querbeschleunigungen erkannt werden, die sich nicht aus der obigen Abfrage ergeben. So kann beispielsweise eine große Dachlast 220 zu einer Erhöhung des Schwerpunkts S (h wird größer) führen. Der Schwellenwert in 503 wird aber ausgelegt sein für ein Fahrzeug ohne hohe Dachlast, so daß er höher gewählt sein wird. Demzufolge kann es sein, daß die Abfrage 503 zu einem unterkritischen Ergebnis führt, gleichwohl aber aufgrund stark schlupfender Innenräder (wegen der hohen Dachlast) die Abfrage 504 zu einem kritischen Ergebnis führt. Auch dann können die Schritte 505 bis 510 angesteuert werden. Das Verfahren ist beendet, wenn wieder eine unterkritische Querbeschleunigung aq erkannt wird. Nach Erkennen einer kritischen Situation ("ja" in 503 oder 504), können gestufte Maßnahmen eingeleitet werden. In 505 wird zunächst das Motormoment reduziert. Es kann dann abermals die Querbeschleunigung abgefragt werden (Schritt 506). Ist sie weiterhin überkritisch ("ja" in 506), wird zusätzlich zur Reduzierung des Motormoments das Verzögerungsmoment durch Druckaufbau im Schritt 507 erhöht. Dies kann noch im Bereich der Teilbremsung geschehen. Ergeben sich im Schritt 508 abermals überkritische Querbeschleunigungswerte, können weitere Bremsstrategien, insbesondere stabilitätsoptimierte Bremsstrategien im Schritt 509 aufgerufen werden. Ergeben sich im Schritt 510 abermals überkritische Werte, kann im Schritt 511 eine Verzögerungsoptimierung eingeleitet werden, die solange beibehalten wird, bis unterkritische Querbeschleunigungswerte erreicht sind.

Die gezeigte Abstufung von Maßnahmen ist beispielhaft zu verstehen. Entsprechend den sonstigen Gegebenheiten der Bremsanlage können einzelne oder mehrere der Abstufungen fehlen oder modifiziert sein.

Die Implementierung der genannten Einrichtungen kann mittels eines digitalen Reglers erfolgen. Insofern können die Darstellungen in Fig. 3 und 4 als Logikschaltbild verstanden werden.

## Patentansprüche

1. Verfahren zum Verringern der Kippgefahr eines Fahrzeugs mit den schritten
Begrenzung der Querbeschleunigung eines fahrenden Fahrzeugs mit kritischer Querbeschleunigung, bei dem
ein Fahrzustand mit kritischer Querbeschleunigung erkannt wird, und
in einer Regelung bzw. Steuerung eine geeignete Gegenmaßnahme nach einem Programm geregelt bzw. gesteuert wird
in einer Beeinflussungsvorrichtung die Regelstrategie der Regelung bzw. Steuerung verändert wird, wenn ein Fahrzustand mit kritischer Querbeschleunigung erkannt wird,
**dadurch gekennzeichnet, dass** mittels der Steuerung bzw. Regelung anhand der modifizierten Strategie eine Reduzierung des Motormoments erfolgt und ein Bremsdruck aktiv an der Vorderachse nur an dem kurvenäußeren Rad des Fahrzeugs aufgebaut wird.

2. Verfahren nach Anspruch 1, **dadurch gekennzeichnet, daß** zur Erkennung des Fahrzustands mit kritischer Querbeschleunigung die Querbeschleunigung ermittelt und diese mit einem Schwellenwert verglichen wird, wobei der Fahrzustand mit kritischer Querbeschleunigung erkannt wird, wenn die ermittelte Querbeschleunigung den Schwellenwert überschreitet.

3. Verfahren nach Anspruch 2, **dadurch gekennzeichnet, daß** die Querbeschleunigung aus Radgeschwindigkeiten von Fahrzeugrädern ermittelt wird.

4. Verfahren nach Anspruch 3, **dadurch gekennzeichnet, daß** zur Ermittlung Radgeschwindigkeitswerte herangezogen werden, die bzgl. des Einflusses der Radradien korrigiert sind.

5. Verfahren nach einem der Ansprüche 2 bis 4, **dadurch gekennzeichnet, daß** zur Erkennung des Fahrzustands mit kritischer Querbeschleunigung der Gradient der Querbeschleunigung ermittelt wird, wobei der Fahrzustand mit kritischer Querbeschleunigung erkannt wird, wenn der ermittelte Gradient bestimmten Bedingungen genügt.

6. Verfahren nach einem der vorherigen Ansprüche, **dadurch gekennzeichnet, daß** zur Erkennung des Fahrzustands mit kritischer Querbeschleunigung die Radschlupfwerte ermittelt und diese mit einem oder mehreren Schwellenwerten verglichen werden, wobei der Fahrzustand mit kritischer Querbeschleunigung dann erkannt wird, wenn die Radschlupfwerte von kurveninneren Rädern über einem ersten Schwellenwert und die Radschlupfwerte von kurvenäußeren Rädern unter einem zweiten, vorzugsweise niedrigeren Schwellenwert liegen.

7. Verfahren nach einem der vorherigen Ansprüche, **dadurch gekennzeichnet, daß** zur Erkennung des Fahrzustands mit kritischer Querbeschleunigung das Auflageverhalten eines Rades auf der Fahrbahn, vorzugsweise des zuletzt abhebenden Rades an der Kurveninnenseite, ermittelt wird, wobei der Fahrzustand mit kritischer Querbeschleunigung erkannt wird, wenn das Rad von der Fahrbahn abgehoben hat.

8. Verfahren nach Anspruch 7, **dadurch gekennzeichnet, daß** zur Ermittlung des Auflageverhaltens eines Rades auf der Fahrbahn vorzugsweise dann, wenn bestimmte Bedingungen vorliegen, an diesem Rad bzw. an den beiden Räder der Achse Bremsdruck aufgebaut wird, vorzugsweise kleiner als 10 bar, und das Schlupfverhalten des Rades überprüft wird.

9. Verfahren nach einem der vorherigen Ansprüche, **dadurch gekennzeichnet, daß** dann, wenn der Fahrzustand mit kritischer Querbeschleunigung erkannt wurde und keine Bremsung oder eine Teilbremsung vorliegt, eine Bremsdruckerhöhung und/oder eine Antriebsmomentenherabsetzung veranlaßt wird.

10. Verfahren nach einem der vorherigen Ansprüche, **dadurch gekennzeichnet, daß** dann, wenn der Fahrzustand mit kritischer Querbeschleunigung erkannt wurde und eine Vollbremsung oder Teilbremsung vorliegt, eine asymmetrische Bremsdruckabsenkung und/oder eine Antriebsmomentenherabsetzung veranlaßt wird.

11. Verfahren nach Anspruch 9 oder 10, **dadurch gekennzeichnet, daß** an einer Achse symmetrische Bremsdruckveränderungen veranlaßt werden, wobei nachfolgende Regelsysteme zumindest ein Signal empfangen, das die kritische Querbeschleunigung anzeigt, woraufhin diese ihr Regelverhalten modifizieren.

12. Verfahren nach einem oder mehreren der Ansprüche 9 bis 11, **dadurch gekennzeichnet, daß** dann, wenn der Fahrzustand mit kritischer Querbeschleunigung erkannt wurde, die Reduktion der Querbeschleunigung durch aktives, absichtlich herbeigeführtes Untersteuern des Fahrzeugs erreicht wird.

13. Verfahren nach Anspruch 12, **dadurch gekennzeichnet, daß** das Untersteuern durch Aufbau unterschiedlicher Bremskräfte an den beiden Fahrzeugseiten oder durch gezielten Aufbau eines Giermomentes erreicht wird.

14. Verfahren nach einem oder mehreren der Ansprüche 9 bis 11, **dadurch gekennzeichnet, daß** dann, wenn der Fahrzustand mit kritischer Querbeschleunigung erkannt wurde, die Reduktion der Querbeschleunigung durch aktive Bremsdruckerhöhung an der Vorderachse zum Begrenzen der Seitenführungskräfte an der Vorderachse herbeigeführt wird.

15. Verfahren nach Anspruch 4, **dadurch gekennzeichnet, daß** die Querbeschleunigung nach Maßgabe von kurzzeitigen und langzeitigen Korrekturfaktoren der Räder einer Achse ermittelt wird.

16. Kippverhinderungsvorrichtung mittels Begrenzung einer Querbeschleunigung eines fahrenden Fahrzeugs mit kritischer Querbeschleunigung, mit
einer Erkennungseinrichtung (310) zum Erkennen eines Fahrzustands mit kritischer Querbeschleunigung, und
einer Regelung bzw. Steuerung zum Regeln bzw. Steuern des Bremsdruckes nach einem Programm
einer Beeinflussungseinrichtung (320) zur Veränderung der Regelstrategie der Regelung bzw. Steuerung bei einem erkannten Fahrzustand mit kritischer Querbeschleunigung,
**dadurch gekennzeichnet, daß** die Regelung bzw. Steuerung dann anhand der modifizierten Strategie den Bremsdruck aktiv an der Vorderachse nur an dem kurvenäußeren Rad des Fahrzeugs aufbaut und das Motormoment reduziert.

17. Kippverhinderungsvorrichtung nach Anspruch 16, **dadurch gekennzeichnet, daß** die Erkennungseinrichtung (310) eine erste Ermittlungseinrichtung (410) zur Ermittlung der Querbeschleunigung sowie eine erste Vergleichseinrichtung (411) aufweist, um die ermittelte Querbeschleunigung mit einem Schwellenwert zu vergleichen.

18. Kippverhinderungsvorrichtung nach Anspruch 17, **dadurch gekennzeichnet, daß** die erste Ermittlungseinrichtung (310) nach Maßgabe von Signalen von Radsensoren (114a-d) arbeitet.

19. Kippverhinderungsvorrichtung nach Anspruch 18, **gekennzeichnet durch** eine Korrektureinrichtung, die Radgeschwindigkeitswerte bzgl. des Einflusses der Radradien korrigiert.

20. Kippverhinderungsvorrichtung nach einem der Ansprüche 17 bis 19, **dadurch gekennzeichnet, daß** die Erkennungseinrichtung (310) eine zweite Ermittlungseinrichtung (420) zur Ermittlung des Gradienten der Querbeschleunigung sowie eine nachfolgende erste Auswerteeinrichtung (421) aufweist.

21. Kippverhinderungsvorrichtung nach einem der Ansprüche 16 bis 20, **dadurch gekennzeichnet, daß** die Erkennungseinrichtung (310) eine dritte Ermittlungseinrichtung (430) zur Ermittlung der Radschlupfwerte aufweist, sowie zweite Vergleichseinrichtungen (431), um die ermittelten Radschlupfwerte mit einem oder mehreren Schwellenwerten zu verglichen.

22. Kippverhinderungsvorrichtung nach einem der Ansprüche 16 bis 21, **dadurch gekennzeichnet, daß** die Erkennungseinrichtung (310) eine vierte Ermittlungseinrichtung (440) zur Ermittlung des Auflageverhaltens eines Rades auf der Fahrbahn sowie eine nachfolgende zweite Auswerteeinrichtung (441) aufweist.

23. Kippverhinderungsvorrichtung nach Anspruch 22, **dadurch gekennzeichnet, daß** die vierte Ermittlungseinrichtung (440) vorzugsweise dann, wenn bestimmte Bedingungen vorliegen, an einem Rad Bremsdruck aufbaut, vorzugsweise weniger als 10 bar, und eine Überprüfungseinrichtung aufweist, die das Schlupfver-halten des Rades überprüft.

24. Kippverhinderungsvorrichtung nach einem der Ansprüche 16 bis 23, **dadurch gekennzeichnet, daß** die Beeinflussungseinrichtung (320) dann, wenn der Fahrzustand mit kritischer Querbeschleunigung erkannt wurde und keine Bremsung oder eine Teilbremsung vorliegt, eine Bremsdruckerhöhung und/oder eine Antriebsmomentenherabsetzung veranlaßt.

25. Kippverhinderungsvorrichtung nach einem der Ansprüche 16 bis 24, **dadurch gekennzeichnet, daß** die Beeinflussungsvorrichtung (320) dann, wenn der Fahrzustand mit kritischer Querbeschleunigung erkannt wurde und eine Vollbremsung vorliegt, eine einseitige Bremsdruckabsenkung und/oder eine Antriebsmomentenherabsetzung veranlaßt.

26. Kippverhinderungsvorrichtung nach Anspruch 24 oder 25, **dadurch gekennzeichnet, daß** die Beeinflussungseinrichtung an einer Achse symmetrische Bremsdruckveränderungen veranlaßt und für nachfolgende Regelsysteme zumindest ein Signal ausgibt, das die kritische Querbeschleunigung anzeigt.

27. Kippverhinderungsvorrichtung nach Anspruch 19, **dadurch gekennzeichnet, daß** die erste Ermittlungseinrichtung auf Korrekturwerte in der Korrektureinrichtung Bezug nimmt.

28. Kippverhinderungsvorrichtung nach einem der Ansprüche 16 bis 27, **dadurch gekennzeichnet, daß** die Bremsanlage eine Vorrichtung aufweist, die einen aktiven Bremsdruckaufbau ermöglicht.

## Claims

1. Method of limiting the rollover risk of a vehicle by the steps of:
limiting the lateral acceleration of a travelling vehicle with a critical lateral acceleration, wherein
a driving condition with a critical lateral acceleration is detected, and
an appropriate countermeasure is controlled according to a program in a control
the control strategy of the control is modified in an influencing device when a driving condition with a critical lateral acceleration is detected,
**characterized in that** based on the modified strategy, the control is used to reduce the engine torque and to build up braking pressure actively at the front axle only on the bend-outward wheel of a vehicle.

2. Method as claimed in claim 1,
**characterized in that** the lateral acceleration is determined and compared with a threshold value in order to detect a driving condition with a critical lateral acceleration, and the driving condition with a critical lateral acceleration is detected when the determined lateral acceleration exceeds the threshold value.

3. Method as claimed in claim 2,
**characterized in that** the lateral acceleration is determined from speeds of vehicle wheels.

4. Method as claimed in claim 3,
**characterized in that** wheel speed values being corrected as regards the influence of the wheel radii are taken into account for the determination.

5. Method as claimed in any one of claims 2 to 4,
**characterized in that** the gradient of the lateral acceleration is determined for detecting the driving condition with a critical lateral acceleration, and the driving condition with a critical lateral acceleration is detected when the determined gradient satisfies defined conditions.

6. Method as claimed in any one of the preceding claims,
**characterized in that** the wheel slip values are determined and compared to one or a plurality of threshold values for detecting the driving condition with a critical lateral acceleration, and the driving condition with a critical lateral acceleration is detected when the wheel slip values on the bend-inward wheels are in excess of a first threshold value and the wheel slip values on the bend-outward wheels are below a second, preferably lower threshold value.

7. Method as claimed in any one of the preceding claims,
**characterized in that** the contact behaviour of a wheel on the road surface, preferably the wheel on the inner side of a bend which lifts as last, is determined for detecting the driving condition with a critical lateral acceleration, and the driving condition with a critical lateral acceleration is detected when the wheel has lifted from the road surface.

8. Method as claimed in claim 7,
**characterized in that** for determining the contact behaviour of a wheel on the road surface, preferably, when defined conditions prevail, braking pressure that is preferably lower than 10 bar is built up on this wheel or on both wheels of the axle, and the slip behaviour of the wheel is checked.

9. Method as claimed in any one of the preceding claims,
**characterized in that** a braking pressure increase and/or a driving torque decrease is initiated when the driving condition with a critical lateral acceleration has been detected and in the absence of braking or partial braking.

10. Method as claimed in any one of the preceding claims,
**characterized in that** an unsymmetrical braking pressure reduction and/or a driving torque decrease is initiated when the driving condition with a critical lateral acceleration has been detected and when full braking or partial braking prevails.

11. Method as claimed in claim 9 or 10,
**characterized in that** symmetrical braking pressure changes are initiated on one axle, and the following control systems receive at least one signal which indicates the critical lateral acceleration, with the control systems modifying their control behaviour in response thereto.

12. Method as claimed in any one or more of claims 9 to 11,
**characterized in that** when the driving condition with a critical lateral acceleration has been detected, the reduction of the lateral acceleration is achieved by an active, deliberately initiated understeering of the vehicle.

13. Method as claim 12,
**characterized in that** the understeering is achieved by building up different brake forces on the two vehicle sides or by a controlled development of a yawing torque.

14. Method as claimed in any one or a plurality of claims 9 to 11,
**characterized in that** when the driving condition with a critical lateral acceleration has been detected, the reduction of the lateral acceleration is brought about by an active braking pressure increase on the front axle in order to limit the cornering forces on the front axle.

15. Method as claimed in claim 4,
**characterized in that** the lateral acceleration is determined depending on short-term and long-term correction factors of the wheels of an axle.

16. Device of preventing rollover by way of limiting a lateral acceleration of a travelling vehicle with a critical lateral acceleration, including
a detection device (310) for detecting a driving condition with a critical lateral acceleration, and
a control for controlling the brake pressure according to a program,
an influencing device (320) for modifying the control strategy of the control when a driving condition with a critical lateral acceleration has been detected,
**characterized in that** based on the modified strategy, the control then actively builds up brake pressure at the front axle only at the bend-outward wheel of the vehicle and reduces the engine torque.

17. Rollover prevention device as claimed in claim 16,
**characterized in that** the detection device (310) includes a first determining device (410) for determining the lateral acceleration and a first comparison device (411) for comparing the determined lateral acceleration with a threshold value.

18. Rollover prevention device as claimed in claim 17,
**characterized in that** the first determining device (410) is operating in response to signals from wheel sensors (114a-d).

19. Rollover prevention device as claimed in claim 18,
**characterized by** a correction device which corrects wheel speed values with respect to the influence of the wheel radii.

20. Rollover prevention device as claimed in any one of claims 17 to 19,
**characterized in that** the detection device (310) includes a second determining device (420) for determining the gradient of the lateral acceleration, and a subsequent first evaluating device (421).

21. Rollover prevention device as claimed in any one of claims 16 to 20,
**characterized in that** the detection device (310) includes a third determining device (430) for determining the wheel slip values, and second comparison devices (431) to compare the determined wheel slip values with one or a plurality of threshold values.

22. Rollover prevention device as claimed in any one of claims 16 to 21,
**characterized in that** the detection device (310) includes a fourth determining device (440) for determining the contact behaviour of a wheel on the road surface and a subsequent second evaluating device (441).

23. Rollover prevention device as claimed in claim 22,
**characterized in that** the fourth determining device (440) builds up braking pressure of preferably less than 10 bar on a wheel, preferably when defined conditions prevail, the said device (440) including a testing device which checks the slip behaviour of the wheel.

24. Rollover prevention device as claimed in any one of claims 16 to 23,
**characterized in that** the influencing device (320) initiates a braking pressure increase and/or a driving torque decrease when the driving condition with a critical lateral acceleration has been detected and in the absence of braking or partial braking.

25. Rollover prevention device as claimed in any one of claims 16 to 24,
**characterized in that** the influencing device (320) initiates a braking pressure reduction on one side and/or a driving torque decrease when the driving condition with a critical lateral acceleration has been detected and when full braking prevails.

26. Rollover prevention device as claimed in claim 24 or 25,
**characterized in that** the influencing device initiates symmetrical braking pressure variations on one axle and issues at least one signal which indicates the critical lateral acceleration to the following control systems.

27. Rollover prevention device as claimed in claim 19,
**characterized in that** the first determining device refers to correction values in the correction device.

28. Rollover prevention device as claimed in any one of claims 16 to 27,
**characterized in that** the brake system includes a device which permits an active braking pressure build-up.

## Revendications

1. Procédé pour réduire le risque de renversement d'un véhicule comportant les étapes suivantes :
limitation de l'accélération transversale d'un véhicule en marche avec accélération transversale critique, dans lequel
un état de conduite avec accélération transversale critique est reconnu, et
dans une régulation ou commande, un contre-moyen approprié est régulé ou commandé selon un programme,
dans un dispositif d'intervention, la stratégie de régulation de la régulation ou de la commande est modifiée si un état de conduite avec accélération transversale critique est reconnu,
**caractérisé en ce qu'**au moyen de la commande ou de la régulation, à l'aide de la stratégie modifiée, il se produit une réduction du couple moteur et une pression de freinage est constituée activement sur l'essieu avant, uniquement sur la roue du véhicule sur le côté extérieur à la courbe.

2. Procédé selon la revendication 1, **caractérisé en ce que** pour reconnaître l'état de conduite avec accélération transversale critique, l'accélération transversale est déterminée et celle-ci est comparée à une valeur de seuil, l'état de conduite avec accélération critique étant reconnu si l'accélération transversale déterminée dépasse la valeur de seuil.

3. Procédé selon la revendication 2, **caractérisé en ce que** l'accélération transversale est déterminée à partir de vitesses des roues du véhicule.

4. Procédé selon la revendication 3, **caractérisé en ce que** pour la détermination on utilise des valeurs de vitesse des roues qui sont corrigées de l'influence du rayon des roues.

5. Procédé selon l'une des revendications 2 à 4, **caractérisé en ce que** pour la reconnaissance de l'état de conduite avec accélération transversale critique, le gradient de l'accélération transversale est déterminé, l'état de conduite avec accélération transversale critique étant reconnu si le gradient obtenu satisfait à des conditions déterminées.

6. Procédé selon l'une des revendications précédentes, **caractérisé en ce que** pour la reconnaissance de l'état de conduite avec accélération transversale critique, les valeurs de patinage des roues sont déterminées et celles-ci sont comparées à une ou plusieurs valeurs de seuil, l'état de conduite avec accélération transversale critique étant reconnu si les valeurs de patinage des roues du côté intérieur à la courbe se situent au-dessus d'une première valeur de seuil et les valeurs de patinage des roues sur le côté extérieur à la courbe se situent au-dessous d'une seconde valeur de seuil de préférence plus basse.

7. Procédé selon l'une des revendications précédentes, **caractérisé en ce que** pour la reconnaissance de l'état de conduite avec accélération transversale critique, le comportement à l'appui d'une roue sur la chaussée, de préférence de la roue se soulevant en dernier sur le côté intérieur à la courbe, est déterminé, l'état de conduite avec accélération transversale critique étant reconnu si la roue s'est soulevée de la chaussée.

8. Procédé selon la revendication 7, **caractérisé en ce que** pour la détermination du comportement à l'appui d'une roue sur la chaussée de préférence si des conditions déterminées existent, sur cette roue ou sur les deux roues de l'essieu une pression de freinage est constituée, de préférence inférieure à 10 bars, et le comportement au patinage de la roue est vérifié.

9. Procédé selon l'une des revendications précédentes, **caractérisé en ce que** lorsque l'état de conduite avec accélération transversale critique a été reconnu et aucun freinage n'est présent ou un freinage partiel est présent, il est provoqué une augmentation de la pression de freinage et/ou une diminution du couple moteur.

10. Procédé selon l'une des revendications précédentes, **caractérisé en ce que** lorsque l'état de conduite avec accélération transversale critique est reconnu et lorsqu'on est en présence d'un freinage totale ou partiel, il est provoqué un abaissement asymétrique de la pression de freinage et/ou une réduction du couple moteur.

11. Procédé selon la revendication 9 ou 10, **caractérisé en ce que** sur un essieu des variations symétriques de la pression de freinage sont provoquées, les systèmes de régulation suivants recevant au moins un signal qui indique l'accélération transversale critique, après quoi ceux-ci modifient leur comportement de régulation.

12. Procédé selon une ou plusieurs des revendications 9 à 11, **caractérisé en ce que** lorsque l'état de conduite avec accélération transversale critique a été reconnu, la réduction de l'accélération transversale est atteinte par sous-virage actif du véhicule, volontairement provoqué.

13. Procédé selon la revendication 12, **caractérisé en ce que** le sous-virage est obtenu par constitution de différentes forces de freinage sur les deux côtés du véhicule ou par constitution ciblée d'un moment d'embardée.

14. Procédé selon une ou plusieurs des revendications 9 à 11, **caractérisé en ce que** lorsque l'état de conduite avec accélération transversale critique a été reconnu, la réduction de l'accélération transversale est provoquée par augmentation de la pression de freinage sur l'essieu avant pour limiter les forces de guidage latérales sur l'essieu avant.

15. Procédé selon la revendication 4, **caractérisé en ce que** l'accélération transversale est déterminée en fonction de facteurs de correction de courte durée et de longue durée des roues d'un essieu.

16. Dispositif empêchant un renversement par limitation d'une accélération transversale d'un véhicule en marche avec accélération transversale critique, comportant
un dispositif de reconnaissance (310) pour reconnaître un état de conduite avec accélération transversale critique, et
une régulation ou commande pour réguler ou commander la pression de freinage selon un programme
un dispositif d'intervention (320) pour modifier la stratégie de régulation de la régulation ou commande lors d'un état de conduite reconnu avec accélération transversale critique,
**caractérisé en ce que** la régulation ou la commande constitue de manière active, à l'aide de la stratégie modifiée, la pression de freinage sur l'essieu avant uniquement sur la roue du véhicule côté extérieur à la courbe, et réduit le couple moteur.

17. Dispositif empêchant le renversement selon la revendication 16, **caractérisé en ce que** le dispositif de reconnaissance (310) comporte un premier dispositif de détermination (410) pour déterminer l'accélération transversale ainsi qu'un premier dispositif de comparaison (411) afin de comparer l'accélération transversale déterminée à une valeur de seuil.

18. Dispositif empêchant le renversement selon la revendication 17, **caractérisé en ce que** le premier dispositif de détermination (310) travaille en fonction de signaux de capteurs des roues (114a-d).

19. Dispositif empêchant le renversement selon la revendication 18, **caractérisé par** un dispositif de correction qui corrige des valeurs de vitesse des roues de l'influence du rayon des roues.

20. Dispositif empêchant le renversement selon l'une des revendications 17 à 19, **caractérisé en ce que** le dispositif de reconnaissance (310) comporte un deuxième dispositif de détermination (420) pour déterminer le gradient de l'accélération transversale ainsi qu'un premier dispositif d'évaluation (421) suivant.

21. Dispositif empêchant le renversement selon l'une des revendications 16 à 20, **caractérisé en ce que** le dispositif de reconnaissance (310) comporte un troisième dispositif de détermination (430) pour déterminer les valeurs de patinage des roues, ainsi que des deuxièmes dispositifs de comparaison (431) pour comparer les valeurs déterminées du patinage des roues à une ou plusieurs valeurs de seuil.

22. Dispositif empêchant le renversement selon l'une des revendications 16 à 21, **caractérisé en ce que** le dispositif de reconnaissance (310) comporte un quatrième dispositif de détermination (440) pour déterminer le comportement à l'appui d'une roue sur la chaussée ainsi qu'un deuxième dispositif d'évaluation (441) suivant.

23. Dispositif empêchant le renversement selon la revendication 22, **caractérisé en ce que** le quatrième dispositif de détermination (440) constitue, lorsque des conditions déterminées existent, une pression de freinage sur une roue, de préférence inférieure à 10 bars, et comporte un dispositif de vérification qui vérifie le comportement ou patinage de la roue.

24. Dispositif empêchant le renversement selon l'une des revendications 16 à 23, **caractérisé en ce que** le dispositif d'intervention (320) provoque, lorsque l'état de conduite avec accélération transversale critique a été reconnu et en l'absence d'un freinage ou en présence d'un freinage partiel, une augmentation de la pression de freinage et/ou une réduction du couple moteur.

25. Dispositif empêchant le renversement selon l'une des revendications 16 à 24, **caractérisé en ce que** le dispositif d'intervention (320) provoque, lorsque l'état de conduite avec accélération transversale critique a été reconnu et en présence d'un plein freinage, un abaissement de la pression de freinage unilatéral et/ou une réduction du couple moteur.

26. Dispositif empêchant le renversement selon la revendication 24 ou 25, **caractérisé en ce que** le dispositif d'intervention provoque sur un essieu des variations symétriques de la pression de freinage et délivre, pour les systèmes de régulation suivants, au moins un signal qui indique l'accélération transversale critique.

27. Dispositif empêchant le renversement selon la revendication 19, **caractérisé en ce que** le premier dispositif de détermination se réfère à des valeurs de correction dans le dispositif de correction.

28. Dispositif empêchant le renversement selon l'une des revendications 16 à 27, **caractérisé en ce que** le système de freinage comporte un dispositif qui permet une constitution active de la pression de freinage.
